# EUROPÄISCHE PATENTANMELDUNG

(11) **EP 1 870 674 A2**
(43) Veröffentlichungstag der Anmeldung: **26.12.2007**
(21) Anmeldenummer: 07107980.0
(22) Anmeldetag: 11.05.2007
(51) Int. Cl.: G01C 21/36

(54) **Vorrichtung und Verfahren zur Kurvenvorwarnung**

(30) Priorität: 20.06.2006 DE 102006028277
(71) Anmelder: ROBERT BOSCH GMBH, 70442 Stuttgart (DE)
(72) Erfinder: Poechmueller, Werner, 31139, Hildesheim (DE)

(57) **Zusammenfassung**

Die Erfindung betrifft eine Vorrichtung und ein Verfahren zur Kurvenvorwarnung mit einer Steuereinheit (5), die mit einem Kartendaten (2) aufweisenden Speicher (3) in Verbindung steht und die mittels Positionsermittlungsmitteln (4) eine aktuelle Position ermittelt, wobei für ein vorgebbaren vorausliegenden Streckenteil eine Krümmung der Strecke auf Basis der Kartendaten (2) berechenbar ist und anhand der Krümmung und einer vorzugsweise von einem Bediener mittels Eingabemitteln (6) eingebbaren Eingabewerten eine Kurvensollgeschwindigkeit als Empfehlung berechenbar und anzeigbar ist.

## Beschreibung

Die Erfindung betrifft eine Vorrichtung und ein Verfahren zur Kurvenvorwarnung, insbesondere für Kraftfahrzeuge.

Bei Fahrzeugen, wie insbesondere bei Kraftfahrzeugen, stellen in Kurven zu schnell gefahrene Fahrzeuge eine häufige Unfallursache dar. Um die Häufigkeit solcher Unfälle aufgrund einer nicht an den Straßenverlauf angepassten Fahrzeuggeschwindigkeit zu reduzieren, umfassen heutige Fahrerassistenzsysteme zum Teil in digitalen Karten abgespeicherte Geschwindigkeitsinformationen, welche dem Fahrer angezeigt werden können. Dadurch soll der Fahrer informiert werden und die Fahrzeuggeschwindigkeit entsprechend reduzieren und somit das Unfallrisiko herabsenken. Dies stellt jedoch eine reine Wiedergabe von zuvor gespeicherten Geschwindigkeitsdaten dar, die jedoch nicht fahrertypisch oder fahrstiltypisch sind.

Auch ist es bei Fahrerassistenzsystemen bekannt, dass die in einer digitalen Karte abgespeicherte Geschwindigkeit für einen Straßenabschnitt mit der aktuellen Fahrzeuggeschwindigkeit verglichen wird, wobei bei Überschreiten der für die bevorstehende Fahrstrecke oder Kurve angegebene Höchstgeschwindigkeit, der Fahrer gewarnt wird. Eine solche Warnung ist durch die JP 08194894 A bekannt geworden.

Die JP 10003600 A offenbart einen Vergleich zwischen der Straßenlinie und einer Linie eines fahrenden Fahrzeugs. Dabei wird ein Warnsignal ausgegeben, wenn der Grad der Linie der Fahrzeugbewegung und der Straßenlinie wenig zusammen passen.

Die DE 42 01 142 C2 offenbart eine Vorrichtung zur Warnung vor zu hoher Kurvengeschwindigkeit, bei welcher die Vorrichtung einen Geschwindigkeitssollwert ortsabhängig vorgibt und den aktuellen Wert der Geschwindigkeit des Fahrzeugs mit dem Sollwert vergleicht und bei einer Überschreitung eine Warneinrichtung betätigt und/oder eine Verminderung der Fahrgeschwindigkeit herbeiführt. Dabei wird mit festem Schwellwert und einem entsprechenden Algorithmus gearbeitet.

All diesen Systemen haftet der Nachteil an, dass mittels Algorithmen und festen Regeln gearbeitet wird, so dass weder fahrzeugspezifische, fahrbahnspezifische und/oder fahrerabhängige Kenngrößen berücksichtigt werden. Beispielsweise können verschiedene Fahrbahnbeläge auch unterschiedliche Fahrzeuglängs- oder Fahrzeugquerbeschleunigungen zulassen, so dass dadurch unterschiedliche Kurvengeschwindigkeiten möglich wären. Auch können unterschiedliche Fahrstile des Fahrers zu unterschiedlichen Kurvengeschwindigkeiten führen. Insgesamt ist die Akzeptanz solcher Systeme jedoch gering, da auf den spezifischen Fahrstil des Fahrers nicht eingegangen wird.

Aufgabe der Erfindung ist es, eine Vorrichtung und ein Verfahren zur Kurvenvorwarnung zu schaffen, bei welchen insbesondere die fahrerseitigen Kenngrößen, wie Fahrstil, eine im Wesentlichen individuelle Berücksichtigung finden können.

Die erfindungsgemäße Aufgabe wird erreicht durch eine Vorrichtung zur Kurvenvorwarnung mit einer Steuereinheit, die mit einem Kartendaten aufweisenden Speicher in Verbindung steht und die mittels Positionsermittlungsmitteln eine aktuelle Position ermittelt, wobei für einen vorgebbaren vorausliegenden Streckenteil eine Krümmung der Strecke, wie Straße, auf Basis der Kartendaten berechenbar ist und anhand der Krümmung der Strecke und einem vorzugsweise von einem Bediener mittels Eingabemitteln eingebbaren Eingabewert eine Kurvensollgeschwindigkeit als Empfehlung berechenbar und anzeigbar ist. Dadurch kann der Bediener oder Fahrer des Fahrzeugs vorteilhaft seinen Fahrstil durch Eingabe des Eingabewerts bei der Bestimmung der Kurvensollgeschwindigkeit berücksichtigen und erhält so eine Kurvensollgeschwindigkeit bestimmt, die seinem Fahrstil entspricht oder zumindest entgegen kommt.

Besonders vorteilhaft ist es, wenn die Anzeige mittels Anzeigemitteln optisch und/oder akustisch erfolgt. In einem solchen Fall kann die Kurvensollgeschwindigkeit angezeigt werden und/oder eine Warnung vorgenommen werden, wenn die Kurvensollgeschwindigkeit als maximale Geschwindigkeit in der entsprechenden Kurve überschritten ist. Auch kann es zweckmäßig sein, wenn diese Warnung bereits vor dem Erreichen der Kurve bei einer Überschreitung der Kurvensollgeschwindigkeit um einen vorgebbaren Betrag erfolgt. Die Warnung/Information (nämlich Kurvensollgeschwindigkeit in der Kurvenposition mit maximaler Krümmung) kann auch ohne Vergleich mit der aktuellen Fahrzeuggeschwindigkeit erfolgen.

Besonders vorteilhaft ist es, wenn der Eingabewert von einem Bediener zwischen einem Maximalwert und einem Minimalwert eingebbar ist. Dabei kann es zweckmäßig sein, wenn die Eingabe bei jeder Kurve getrennt erfolgt oder die Eingabe beispielsweise einmalig erfolgt und dann solange wieder übernommen wird, bis die Eingabe abgeändert wird. Dabei kann es zweckmäßig sein, wenn der Eingabewert kontinuierlich oder diskret einstellbar oder eingebbar ist.

Gemäß einem weiteren erfindungsgemäßen Gedanken kann es vorteilhaft sein, wenn der Eingabewert von der Steuereinheit der Vorrichtung selbsttätig auswählbar ist anstatt von dem Bediener manuell vorgegeben zu w erden. Dabei ist es besonders zweckmäßig, wenn der auswählbare Wert von der Steuereinheit erlernbar ist aus zuvor eingegeben Eingabewerten und/oder zuvor ermittelten Querbeschleunigungswerten. Dies hat den Vorteil, dass der Fahrstil des Fahrers automatisch ermittelt, wie gelernt, wird.

Zur Erleichterung der Berechnung der Krümmung der Strecke oder Straße ist es zweckmäßig, wenn die Krümmung der vorausliegenden Wegstrecke mittels eines Klothoidenmodells bestimmbar ist. Ein Klothoidenmodell ist dabei ein mathematisches Modell auf Basis von Klothoiden genannten Kurven.

Weiterhin ist es zweckmäßig, wenn die Krümmung der Strecke für eine vorgebbare Teilstrecke der vorausliegenden Strecke ermittelt wird und lediglich eine Kurvengeschwindigkeit eines Teilstücks mit der geringsten Kurvensollgeschwindigkeit anzeigbar ist. So kann sich der Fahrer besser auf diesen Streckenteil konzentrieren.

Weiterhin ist es zweckmäßig, wenn neben der Anzeige der geringsten Kurvensollgeschwindigkeit auch die Entfernung zu diesem Teilstück mit der geringsten Kurvensollgeschwindigkeit anzeigbar ist. Dadurch wird die kritischste Stelle der vorausliegenden Wegstrecke angezeigt und dem Fahrer mitgeteilt oder angezeigt, wie weit er sich mit dem Fahrzeug von dieser Stelle entfernt befindet, so dass der Fahrer sich rechtzeitig darauf einstellen kann, die Fahrzeuggeschwindigkeit anzupassen.

Gemäß einem weiteren erfindungsgemäßen Aspekt ist es zweckmäßig, wenn die Krümmung der Strecke für eine vorgebbare Teilstrecke der vorausliegenden Strecke ermittelt wird und die Kurvensollgeschwindigkeiten in den Kurven des Teilstücks anzeigbar sind. Dadurch erhält der Fahrer eine Information über die anschließend zu befahrenen Kurven und die damit verknüpften Kurvensollgeschwindigkeiten.

Besonders zweckmäßig ist es, wenn zur Berechnung der Kurvensollgeschwindigkeit weiterhin auch Umfeldinformationen, wie beispielsweise die Fahrbahnnässe oder der Reibwert der Fahrbahn, herangezogen wird. Dadurch können die Kurvensollgeschwindigkeiten nicht nur an den Fahrstil des Fahrers angepasst werden, sondern auch den äußeren Straßen- oder Witterungseinflüssen entsprechend angepasst werden. Dabei ist es besonders vorteilhaft, wenn die Umfeldinformationen mittels Sensorsignalen und/oder über eine Datenverbindung mit weiteren in einem Fahrzeug verfügbaren Sensoren und/oder Steuergeräten ermittelbar sind.

Zweckmäßig ist es auch, dass die Warnung erst bei bestimmten Kurvenradien einsetzt, die eine gewisse Kurvenkrümmung überschreiten (Schwellwert). Dieser Schwellwert kann Straßenklassenabhängig gesetzt werden (anderer Schwellwert auf Autobahnen im Vergleich zu Bundes- oder Landstraßen).

Die Aufgabe hinsichtlich des Verfahrens wird gelöst durch ein Verfahren zur Durchführung einer Kurvenvorwarnung insbesondere für Kraftfahrzeuge, wobei eine Steuereinheit Kartendaten vorzugsweise aus einem Speicher einlädt und weiterhin mittels Positionsermittlungsmitteln eine aktuelle Position ermittelt, wobei für einen vorgebbaren vorausliegenden Streckenteil eine Krümmung der Strecke, wie Straße, auf Basis der Kartendaten berechnet wird und anhand der Krümmung und vorzugsweise von einem Bediener mittels Eingabemitteln eingebbaren Eingabewerten eine Kurvensollgeschwindigkeit als Empfehlung berechnet und anzeigt wird.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnung näher erläutert. Es zeigen:
- Fig. 1: eine schematische Darstellung einer erfindungsgemäßen Vorrichtung;
- Fig. 2: eine schematische Darstellung eines Blockschaltbilds eines erfindungsgemäßen Verfahrens;
- Fig. 3: ein Ausführungsbeispiel zur Darstellung der Kurvensollgeschwindigkeit; und
- Fig. 4: ein Ausführungsbeispiel zur Darstellung der Kurvensollgeschwindigkeit.

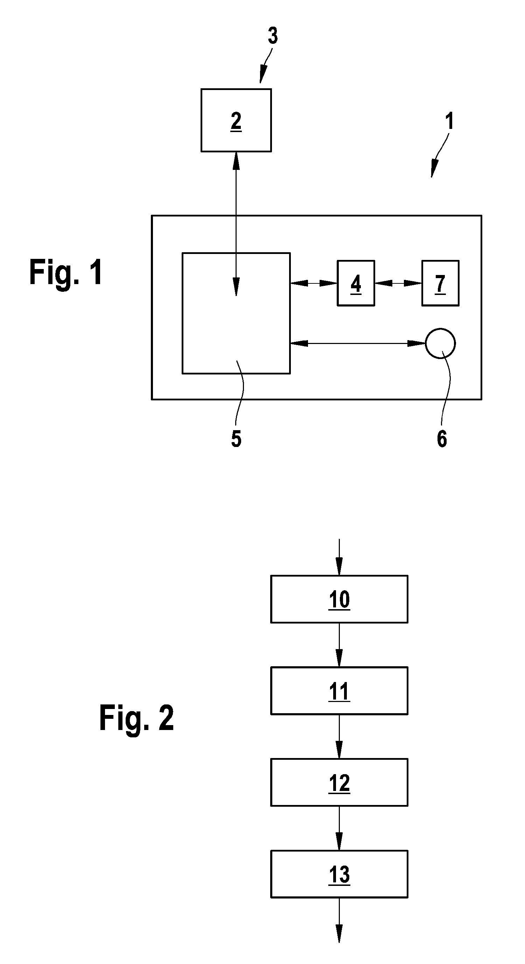

Die Figur 1 zeigt eine vorteilhafte Ausgestaltung einer erfindungsgemäßen Vorrichtung 1. Die Vorrichtung 1 weist dabei einen Speicher 3 auf, in welchem eine digitale Karte 2 gespeichert ist. Auch kann der Speicher 3 lediglich mit der Vorrichtung 1 derart verbunden sein, so dass die Vorrichtung die digitale Karte eines anderen Gerätes nutzen, wie beispielsweise auslesen kann. Dabei kann die Vorrichtung selbst oder das andere Gerät ein Navigationssystem sein.

Die Vorrichtung ist weiterhin in der Lage, die aktuelle Position zu ermitteln und die vor dem Gerät liegende Fahrstrecke eines Fahrzeuges zu ermitteln, falls die Vorrichtung in einem Fahrzeug betrieben wird. Dazu verfügt die Vorrichtung 1 über ein Positionsbestimmungsmittel 4. Das Positionsermittlungsmittel 4 kann beispielsweise ein Mittel zur Bestimmung der Position mittels GPS sein.

Weiterhin weist die Vorrichtung 1 ein Steuereinheit 5 auf, welche mittels den Positionsdaten des Positionsbestimmungsmittels 4 und den Kartendaten der digitalen Karte 2 den vorausliegenden Straßenverlauf bestimmen kann.

Darüber hinaus verfügt die Vorrichtung über ein Anzeige- und/oder Warnmittel 7, mittels welchem die Vorrichtung den Bediener der Vorrichtung oder des Fahrzeugs über eine bestimmte vorzugsweise maximale Kurvengeschwindigkeit informieren und/oder warnen kann. Diese Information und/oder Warnung kann vorzugsweise optisch und/oder akustisch erfolgen. Dazu kann das Anzeige- und/oder Warnmittel beispielsweise ein Lautsprecherelement oder ein Anzeigemittel, wie Displayelement, sein.

Weiterhin verfügt die Vorrichtung 1 über ein Eingabemittel 6, mittels welchem der Bediener der Vorrichtung 1 Eingaben machen kann, um beispielsweise eine von der Vorrichtung vorgenommene berechnete Kurvenvorwarnung an seinen Fahrstil anzupassen.

Die Vorrichtung bestimmt anhand der aktuellen Positionsdaten und der digitalen Karte 2 einen vor dem Fahrzeug liegenden Kurvenverlauf der Straße und berechnet anhand der Daten des Kurvenverlaufs eine maximale Kurvengeschwindigkeit als Kurvensollgeschwindigkeit. Aufgrund der Eingabe mit dem Eingabemittel wird die errechnete maximale Kurvengeschwindigkeit oder Kurvensollgeschwindigkeit an den Fahrstil bzw. die Eingabe angepasst, so dass die Kurvenvorwarnung an die bedienerseitige Eingabe angepasst ist.

Vorteilhaft sind die vom Bediener einzugebenden Eingaben parametrisierbar, wie über einen zumindest ein- oder mehrdimensionalen Parameter parametrisierbar. Dadurch kann der Bediener beispielsweise frei einen Wert zwischen einer oberen und einer unteren Schranke wählen, innerhalb welcher er die Vorgabe der maximalen Kurvengeschwindigkeit oder der Kurvensollgeschwindigkeit der Vorrichtung 1 manipulieren und abändern kann.

Dabei kann der Bediener oder Fahrer des Fahrzeugs vorteilhaft zwischen einer mehr sportlichen oder einer mehr komfortablen Fahrweise einen Maximalwert oder einen Zwischenwert wählen.

Auch kann eine Einstellung zwischen einer maximalen Querbeschleunigung und einer minimalen Querbeschleunigung oder einem Zwischenwert zwischen diesen Extremwerten erfolgen.

Dabei kann die maximale Querbeschleunigung als physikalisch maximale Querbeschleunigung von der Vorrichtung 1 bestimmt werden. Die minimale Querbeschleunigung kann eine Querbeschleunigung sein, die in typischen Kurven eine unkritische Querbeschleunigung ist und unterhalb welcher auch keine Warnung erfolgen würde.

Die Figur 2 zeigt schematisch ein Blockschaltbild zur Erläuterung des erfindungsgemäßen Verfahrens. In Block 10 wird das Verfahren gestartet und die Steuereinheit 5 der Vorrichtung 1 liest die Kartendaten eines vor dem Fahrzeug liegenden Straßenabschnitts aus der digitalen Karte ein. Dabei kann dies beispielsweise aus einer aktiven Routenführung eines Navigationssystems entnommen werden oder aufgrund der Kartendaten in Verbindung mit der aktuellen Position kann eine vermutete anschließend zu befahrene Strecke mit einer vorgegebenen Vorausschauweite abgeschätzt werden.

In Block 11 wird aufgrund der eingelesenen Kartendaten eine Fahrbahnkrümmung bestimmt. Diese Bestimmung kann notwendig sein, wenn die Daten der Straße bzw. des anschließend zu befahrenen Streckenabschnitts beispielsweise nur in Polygonen oder Polygonzügen vorliegt. Für den Fall, dass die Kurve der zu befahrenen Strecke bereits als gekrümmte Kurve vorliegt, kann die Kurvenkrümmung vereinfacht bestimmbar sein.

In Block 12 berechnet die Steuereinheit die Kurvensollgeschwindigkeit. Dies erfolgt in Abhängigkeit von der in Schritt 11 berechneten oder bestimmten Kurvenkrümmung und einem vom Fahrer eingegebenen oder von der Steuereinheit vorgegebenen Eingabewert. Die Berechnung der Kurvengeschwindigkeit erfolgt stets so, dass der ein- oder vorgegebene Wert erreicht, aber nicht überschritten wird.

In Block 13 wird der berechnete Wert der Kurvensollgeschwindigkeit mittels eines Ausgabeelements dem Fahrer ausgegeben. Dabei kann die Ausgabe optisch und/oder akustisch erfolgen. Wird die Kurvensollgeschwindigkeit vom Fahrzeug überschritten kann eine weitergehende Warnung erfolgen.

Die erfindungsgemäße Vorrichtung und das erfindungsgemäße Verfahren stellt somit eine von Fahrer beeinflussbare Kurvengeschwindigkeitswarnvorrichtung oder Informationsvorrichtung dar, wobei der Fahrer des Fahrzeugs als Bediener die Kurvengeschwindigkeit gemäß seinem Fahrstil beeinflussen kann.

In einer ersten Ausführungsvariante der Erfindung kann der Bediener den gewünschten Sollwert für die Kurvensollgeschwindigkeit gemäß der Eingabe in Schritt 12 der Figur 2 in einem eindimensionalen Raum zwischen einem Maximalwert und einem Minimalwert eingeben. Die vom Fahrer einstellbaren Werte zwischen dem Maximalwert und dem Minimalwert können dabei kontinuierlich oder diskret einstellbar sein.

In einer zweiten Ausführungsvariante der Erfindung wird der Sollwert zur Veränderung der Kurvensollgeschwindigkeit nicht durch eine Eingabe des Bedieners vorgenommen, sondern durch die Vorrichtung bzw. deren Steuereinheit selbsttätig gewählt. Dabei kann die Vorrichtung den zu wählenden Eingabewert erlernen. Dies kann beispielsweise dadurch erfolgen, indem über eine vorgebbare Fahrtstrecke oder über eine vorgebbare Zeitspanne mittels eines Sensors die Querbeschleunigung des Fahrzeuges ermittelt wird und anhand dieser Werte eine Kurvensollgeschwindigkeit ermittelt wird. Dabei kann beispielsweise eine vorzunehmende Festlegung der Kurvensollgeschwindigkeit an den einzelnen Maxima der jeweiligen Querbeschleunigungen festgelegt werden. Ein Fahrer mit sportlicher Fahrweise verursacht so höhere Werte einer Querbeschleunigung als ein Fahrer mit komfortabler oder auch weniger sportlicher Fahrweise. Eine Kurvensollgeschwindigkeit kann beispielsweise durch eine Maximumbildung der Querbeschleunigung ermittelt werden, so dass die über eine vorgebbare Fahrtstrecke ermittelte maximale Querbeschleunigung als Maß für die Bestimmung der Kurvensollgeschwindigkeit herangezogen wird.

Auch kann ein Lernvorgang derart erfolgen, dass eine über eine vorgebbare Fahrtstrecke oder Fahrtzeitspanne ermittelte vorangegangene Einstellung des Bedieners zur Einstellung der Kurvensollgeschwindigkeit automatisch herangezogen wird oder eine Einstellung so lange herangezogen wird, bis sie verändert wird.

In einer dritten Ausführungsvariante der Erfindung wird die Bestimmung der Krümmung der Straße bzw. des anschließend zu befahrenen Straßenabschnitts gemäß Block 11 der Figur 2 mittels eines Klothoidenmodells bestimmt. Dazu wird der Straßenabschnitt mittels Klothoiden angenähert oder beschrieben und anhand der entsprechenden Klothoidenfunktion kann die Krümmung der Straße bestimmt werden. Dies ist daher besonders zweckmäßig, da die Straßenmodelle bei der Planung von Straßen bereits teilweise Klothoiden verwenden, so dass die Bestimmung der straßenbeschreibenden Funktion bereits auf dem Klothoidenmodell beruhen und die Ermittlung der Krümmung dadurch erleichtert ist.

In einer vierten Ausführungsvariante wird die Krümmung der vorausliegenden und anschließend zu befahrenen Strecke bestimmt. Daraus wird lediglich die Kurvensollgeschwindigkeit des Teilstücks mit der größten Kurvenkrümmung bestimmt, da hierfür die geringste Kurvengeschwindigkeit ermittelt wird. Die dafür errechnete Kurvensollgeschwindigkeit gemäß Block 12 der Figur 2 wird mittels eines Anzeigeelements, wie beispielsweise Display, dargestellt und dazu wird zusätzlich die Entfernung von dem Punkt mit der größten Kurvenkrümmung dazu dargestellt.

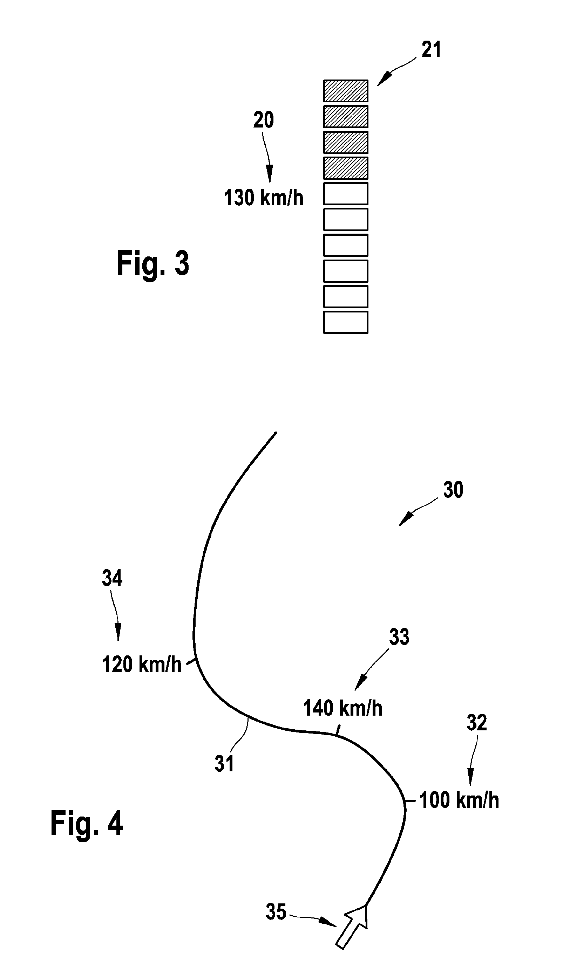

Die Figur 3 zeigt eine solche Darstellung. Links wird mittels Zahlenangabe 20 die Kurvensollgeschwindigkeit angezeigt, wobei rechts davon ein Bargraph 21 bzw. ein Balkendiagramm angezeigt wird, welcher den Abstand von der Stelle der maximalen Krümmung bzw. der minimalen Kurvengeschwindigkeit anzeigt. Im Ausführungsbeispiel der Figur 3 wird links die Kurvengeschwindigkeit von 130 km/h angezeigt und rechts wird mit der Anzahl der Balken der Abstand des Fahrzeugs von der Stelle der maximalen Krümmung, hier mit vier Balken, angezeigt. Der Abstand dient dem Fahrer des Fahrzeugs dazu, den Weg bis zur Stelle mit der größten Krümmung abzuschätzen und somit den noch zur Verfügung stehenden Weg bis zur eventuell notwendigen Reduzierung der Fahrzeuggeschwindigkeit zu kennen und entsprechende Maßnahmen zur Abbremsung des Fahrzeugs zu treffen.

Die Figur 4 zeigt ein weiteres, fünftes Ausführungsbeispiel einer Anzeige 30 einer Kurvensollgeschwindigkeit. Dabei wird die vorausliegende Fahrtstrecke als Linie 31 abschnittsweise auf einem grafikfähigen Display dargestellt. Dabei wird ein vorgebbarer Streckenteil in vorausschauender Weise dargestellt, der einer vorgebbaren Strecke oder einer vorgebbaren Fahrzeit entspricht. Die Strecke kann dabei realitätsgetreu oder auch durchaus gegenüber der Realität verzerrt dargestellt sein, um die Kurven deutlicher wirken zu lassen. Dabei ist es vorteilhaft, wenn neben der Strecke 31 auch die für die Kurven berechneten Kurvensollgeschwindigkeiten dargestellt sind, wie es bei 32, 33, 34 dargestellt ist. Dabei wird die vorausliegende Strecke ab der derzeitigen Position des Fahrzeugs 35 dargestellt.

Bei einem weiteren Ausführungsbeispiel der Erfindung kann der von dem Bediener oder Fahrer vorgegebene Einstellwert in Block 12 der Figur 2 durch Umfeldinformationen verändert werden. Dabei kann beispielsweise bei feuchter oder nasser Fahrbahn der Wert von sportlich zu komfortabel verändert werden, so dass eine geringere Kurvengeschwindigkeit resultiert. Die Detektion einer nassen Fahrbahn kann beispielsweise mittels eines speziellen Sensors erfolgen, wie mittels eines Regensensors, der auch beispielsweise für die Scheibenwischerautomatik nutzbar ist. Bei glatter Fahrbahn kann der Schwellenwert weiter reduziert werden, so dass weiterhin reduzierte Kurvengeschwindigkeiten resultieren. Die Detektion der glatten Fahrbahn kann beispielsweise durch das Steuergerät eines Anti-Schlupf-Regelungs-Systems oder ESP-Systems aus den berechneten Reibwerten zwischen Rad und Fahrbahn mitgeteilt werden.

Allgemein ist es vorteilhaft, wenn die Vorrichtung über eine Datenverbindung mit anderen Steuergeräten des Fahrzeugs verfügt, so dass über die Datenverbindung Umfeldinformationen erhaltbar sind, welche für die Beeinflussung der Kurvensollgeschwindigkeit relevant sein können und welche Einfluss auf die Veränderung des vom Fahrer eingegebenen Einstellwerts für die Kurvensollgeschwindigkeit haben können.

Die oben beschriebenen Ausführungsbeispiel können für sich betrachtet realisiert sein. Sie sind aber auch miteinander kombinierbar.

## Patentansprüche

1. Vorrichtung zur Kurvenvorwarnung mit einer Steuereinheit (5), die mit einem Kartendaten (2) aufweisenden Speicher (3) in Verbindung steht und die mittels Positionsermittlungsmitteln eine aktuelle Position ermittelt, **dadurch gekennzeichnet, dass** für ein vorgebbaren vorausliegenden Streckenteil eine Krümmung der Strecke auf Basis der Kartendaten (2) berechenbar ist und anhand der Krümmung und einer vorzugsweise von einem Bediener mittels Eingabemitteln (6) eingebbaren Eingabewerten eine Kurvensollgeschwindigkeit oder Maximalgeschwindigkeit als Empfehlung berechenbar und anzeigbar ist.

2. Vorrichtung nach Anspruch 1, **dadurch gekennzeichnet, dass** die Anzeige mittels Anzeigemitteln (7) optisch und/oder akustisch erfolgt.

3. Vorrichtung nach einem der vorhergehenden Ansprüche, **dadurch gekennzeichnet, dass** der Eingabewert von einem Bediener zwischen einem Maximalwert und einem Minimalwert eingebbar ist.

4. Vorrichtung nach Anspruch 3, **dadurch gekennzeichnet, dass** der Eingabewert kontinuierlich oder diskret einstellbar oder eingebbar ist.

5. Vorrichtung nach einem der vorhergehenden Ansprüche, **dadurch gekennzeichnet, dass** der Eingabewert von der Steuereinheit (5) der Vorrichtung selbsttätig auswählbar ist.

6. Vorrichtung nach Anspruch 5, **dadurch gekennzeichnet, dass** der auswählbare Eingabewert erlernbar ist aus zuvor eingegeben Eingabewerten und/oder zuvor ermittelten Querbeschleunigungswerten.

7. Vorrichtung nach einem der vorhergehenden Ansprüche, **dadurch gekennzeichnet, dass** die Krümmung der vorausliegenden Wegstrecke mittels eines Klothoidenmodells bestimmbar ist.

8. Vorrichtung nach einem der vorhergehenden Ansprüche, **dadurch gekennzeichnet, dass** die Krümmung der Strecke für eine vorgebbare Teilstrecke der vorausliegenden Strecke ermittelt wird und lediglich eine Kurvengeschwindigkeit eines Teilstücks mit der geringsten Kurvensollgeschwindigkeit anzeigbar ist.

9. Vorrichtung nach Anspruch 8, **dadurch gekennzeichnet, dass** neben der Anzeige der geringsten Kurvensollgeschwindigkeit auch die Entfernung zu diesem Teilstück mit der geringsten Kurvensollgeschwindigkeit anzeigbar ist.

10. Vorrichtung nach einem der vorhergehenden Ansprüche, **dadurch gekennzeichnet, dass** die Krümmung der Strecke für eine vorgebbare Teilstrecke der vorausliegenden Strecke ermittelt wird und die Kurvensollgeschwindigkeiten in den Kurven des Teilstücks anzeigbar sind.

11. Vorrichtung nach einem der vorhergehenden Ansprüche, **dadurch gekennzeichnet, dass** zur Berechnung der Kurvensollgeschwindigkeit weiterhin auch Umfeldinformationen, wie beispielsweise die Fahrbahnnässe, den Reibwert der Fahrbahn, herangezogen wird.

12. Vorrichtung nach einem der vorhergehenden Ansprüche, **dadurch gekennzeichnet, dass** die Kurvengeschwindigkeitswarnung/Information erst bei Überschreiten einer bestimmten Kurvenkrümmung/Querbeschleunigung erfolgt.

13. Vorrichtung nach Anspruch 12, wobei der Schwellwert abhängig von der Straßenklasse (Autobahn, Bundesstraße, Kreisstraße, ...) gesetzt wird.

14. Vorrichtung nach einem der vorhergehenden Ansprüche, **dadurch gekennzeichnet, dass** die Umfeldinformationen mittels Sensorsignalen und/oder über eine Datenverbindung mit weiteren in einem Fahrzeug verfügbaren Steuergeräten ermittelbar sind.

15. Verfahren zur Durchführung einer Kurvenvorwarnung insbesondere für Kraftfahrzeuge, wobei ein Steuereinheit (5) Kartendaten (2) vorzugsweise aus einem Speicher (3) einlädt und weiterhin mittels Positionsermittlungsmitteln (4) eine aktuelle Position ermittelt, **dadurch gekennzeichnet, dass** für einen vorgebbaren vorausliegenden Streckenteil eine Krümmung der Strecke auf Basis der Kartendaten (2) berechnet wird und anhand der Krümmung und vorzugsweise von einem Bediener mittels Eingabemitteln (6) eingebbaren Eingabewerten eine Kurvensollgeschwindigkeit als Empfehlung berechnet und anzeigt wird.

16. Verfahren nach Anspruch 15, **dadurch gekennzeichnet, dass** die Anzeige mittels Anzeigemitteln (7) optisch und/oder akustisch erfolgt.

17. Verfahren nach einem der vorhergehenden Ansprüche 15 oder 16, **dadurch gekennzeichnet, dass** der Eingabewert von einem Bediener zwischen einem Maximalwert und einem Minimalwert kontinuierlich oder diskret einzugeben ist.

18. Verfahren nach einem der vorhergehenden Ansprüche 15 oder 16, **dadurch gekennzeichnet, dass** der Eingabewert von der Steuereinheit (5) der Vorrichtung (1) selbsttätig ausgewählt wird.

19. Verfahren nach Anspruch 18, **dadurch gekennzeichnet, dass** der auswählbare Eingabewert von der Steuereinheit (5) erlernbar ist aus zuvor eingegeben Eingabewerten und/oder zuvor ermittelten Querbeschleunigungswerten.

20. Verfahren nach einem der vorhergehenden Ansprüche 15 bis 19, **dadurch gekennzeichnet, dass** die Krümmung der vorausliegenden Wegstrecke mittels eines Klothoidenmodells bestimmt wird.

21. Verfahren nach einem der vorhergehenden Ansprüche 15 bis 20, **dadurch gekennzeichnet, dass** die Krümmung der Strecke für eine vorgebbare Teilstrecke der vorausliegenden Strecke ermittelt wird und lediglich eine Kurvensollgeschwindigkeit eines Teilstücks mit der geringsten Kurvensollgeschwindigkeit angezeigt wird.

22. Verfahren nach Anspruch 21, **dadurch gekennzeichnet, dass** neben der Anzeige der geringsten Kurvensollgeschwindigkeit auch die Entfernung zu diesem Teilstück mit der geringsten Kurvensollgeschwindigkeit angezeigt wird.

23. Verfahren nach einem der vorhergehenden Ansprüche, **dadurch gekennzeichnet, dass** die Krümmung der Strecke für eine vorgebbare Teilstrecke der vorausliegenden Strecke ermittelt wird und die Kurvensollgeschwindigkeiten in den Kurven des Teilstücks angezeigt werden.

24. Verfahren nach einem der vorhergehenden Ansprüche 15 bis 23, **dadurch gekennzeichnet, dass** zur Berechnung der Kurvensollgeschwindigkeit weiterhin auch Umfeldinformationen, wie beispielsweise die Fahrbahnnässe, den Reibwert der Fahrbahn, herangezogen werden.

25. Verfahren nach einem der vorhergehenden Ansprüche, **dadurch gekennzeichnet, dass** die Umfeldinformationen mittels Sensorsignalen und/oder über eine Datenverbindung mit weiteren in einem Fahrzeug verfügbaren Steuergeräten ermittelt werden.
